# EUROPÄISCHE PATENTSCHRIFT

(11) **EP 0 441 297 B1**
(45) Veröffentlichungstag und Bekanntmachung des Hinweises auf die Patenterteilung: **20.07.1994**
(21) Anmeldenummer: 91101461.1
(22) Anmeldetag: 04.02.1991
(51) Int. Cl.: C04B 26/00, E04F 13/02

(54) **Kunstharzgebundenes Beschichtungsmaterial zum Auftragen auf Gebäudewände, vorzugsweise Kunstharzputz**
Resin banded coating material for application on building walls, especially resin plaster
Matériau d'enduction à liant résinoide pour application sur des murs de bâtiments, en particulier enduit à résine

(30) Priorität: 05.02.1990 DE 4003381
(43) Veröffentlichungstag der Anmeldung: 14.08.1991
(73) Patentinhaber: STO AKTIENGESELLSCHAFT, D-79778 Stühlingen (DE)
(72) Erfinder: Grochal, Peter, Dr. rer. nat. Dipl.-Chem., W-7890 Waldshut-Tiengen 1 (DE)
(74) Vertreter: Patentanwälte Leinweber & Zimmermann

(56) Entgegenhaltungen:
- DE-A- 3 314 033
- DE-A- 3 643 634
- DE-C- 3 120 488

## Beschreibung

Die Erfindung bezieht sich auf kunstharzgebundenes Beschichtungsmaterial zum Auftragen auf Gebäudewände bzw. Fußböden, vorzugsweise Kunstharzputz, -Farbe oder -Estrich, mit einer Dampfdiffusion ermöglichenden Materialstruktur. Derartiges Material, dessen Zusammensetzung und die an das Material gestellten Anforderungen sind seit 3 Jahrzehnten bekannt und in der DIN 18558 sowie 18556 festgehalten. Gegenüber mineralisch abgebundenen Putzen zeichnet sich dieses Material in vorteilhafter Weise dadurch aus, daß es an allen Bauuntergründen haftet sowie durch physikalisches Trocknen, Ausblühungsfreiheit, Abtönbarkeit in beliebigen Farbtönen, verarbeitungsfertige Konsistenz, hohe Wetterbeständigkeit und niedrige Wasseraufnahme.

Als nachteilig hat sich jedoch die im Vergleich zu mineralisch abgebundenen Putzen vorhandene, relativ niedrige Wasserdampfdurchlässigkeit herausgestellt. Wird diese im sogenannten "Trocken-Cup-Verfahren" gemessen, d.h. wird der Wasserdampfdurchgang zwischen 0 und 50% rel. Feuchte gemessen, so ist in diesem Meßbereich hohe Dampfdurchlässigkeit nur dann gegeben, wenn im Putzsystem diffusionsoffene Poren vorhanden sind. Die Struktur der Kunstharzputze ist jedoch weitgehend porenfrei. Der überwiegende Teil der Wasserdampfdiffusion bei Kunstharzputzen erfolgt durch sogenannte Lösungsdiffusion. Diese entfaltet sich dann, wenn die Bindemittelmatrix durch Feuchtigkeit gequollen ist.

Um diesen Nachteil der Kunstharzputze zu beseitigen, wurde versucht, verschiedene poröse Füllstoffe und Bindemittelkombinationen einzusetzen. Dabei wurde festgestellt, daß eine Erhöhung der Wasserdampfdiffusion durch Zusätze von Zement oder Wasserglas gelingt. Dadurch wird jedoch die Ausblühungsneigung erhöht und die Abtönbarkeit des Beschichtungsmaterials stark eingeschränkt.

Bei der Anwendung von nichtporösen Beschichtungen bzw. Estrichen auf dem Fußboden entstehen dann Schwierigkeiten, wenn im Untergrund kapillartransportierbares Wasser enthalten ist. Durch die sog. aufsteigende Feuchtigkeit kann die nichtporöse kunstharzgebundene Schicht delaminiert werden und abplatzen.

Es hat sich überraschenderweise gezeigt, daß kunstharzgebundenes Beschichtungsmaterial, insbesondere Kunstharzputz mit einem nach Wunsch gestalteten Kapillar- bzw. Porensystem und somit erhöhter Dampfdiffusion dadurch zu erhalten ist, daß kapillaren- bzw. porenbildende Zusatzstoffe in Form von Fasern, Hohlfasern, Kugeln, Hohlkugeln, Blättchen, Kristallen oder Granulat beigefügt sind, die im wesentlichen erst nach Verfestigung des Materials löslich sind und mit ihrer Menge und Größe die Porendichte und Porenstruktur bestimmen. Die Löslichkeit dieser Zusatzstoffe ist also dabei so einzustellen, daß eine Auflösung erst nach einer ausreichenden Verfestigung des Kunstharzputzes erfolgt. Vorteilhafterweise können die Zusatzstoffe bei der Verwendung von pulverigen Putzen direkt der Gesamtmischung beigegeben werden. Bei normalem kunstharzgebundenem Beschichtungsmaterial, das bereits verwendungsfertig in Wasser angerührt ist, sollte die Zugabe der Zusatzstoffe erst kurz vor der Verwendung erfolgen.

Als Material für solche Zusatzstoffe sind wasserlösliche oder alkalilösliche Kunststoffe besonders geeignet. Die Gruppen der geeigneten wasser- oder alkalilöslichen Kunststoffe ist recht umfangreich und beinhaltet Hydroxyl-, Carbonyl-, Carboxyl-, Anhydrid-, Säureamid- u.ä. -haltige Polymere, wie z.B. Polysaccharide, Polyvinylalkohol, Polyvinylpyrrolidon, Homo- und Copolymere, die Acryl-, Methacryl-, Itakon-, Croton-, Malein-, Fumar- usw. -säuren und/oder Säureamide bzw. Anhydride sowie Salze dieser Säuren enthalten. Ebenfalls sind Polymere mit z.B. Sulfongruppen geeignet.

Bei Kunstharzputzen, die mit organischen Lösemitteln formuliert sind, können die Zusatzstoffe ebenfalls werksseitig zugesetzt werden. Die Ausbildung der Kapillaren und Poren erfolgt durch Beregnung oder gezieltes Annässen der verfestigten Putze. Als poren- bzw. kapillarenbildende Zusatzstoffe sind neben den vorgenannten besonders wasserlösliche anorganische Salze geeignet.

Die eingangs geschilderte Problematik der Dampfdiffusion stellt sich auch bei Dispersions- und Lösemittelhaltigen Farben. Auch hier können Zusatz bzw. Füllstoffe beigefügt werden, die durch späteres Auflösen die Bildung einer Kapillar- und Porenstruktur gewährleisten. Der vorstehend und in den Ansprüchen gewählte Begriff Beschichtungsmaterial schließt deshalb auch derartige Dispersions- und Lösemittel-haltige Farben mit ein.

Ähnliches gilt auch für Beschichtungen und Estriche, die für Fußböden gedacht sind. Sie können auf wäßriger, lösemittelhaltiger oder auch lösemittelfreier Basis - wie es bei Epoxiden oder Polyurethanen üblich ist - formuliert werden. Bei lösemittelhaltiger und lösemittelfreier Formulierung können die obengenannten wasserlöslichen Zusatzstoffe problemlos werkseitig zugesetzt werden.

Die im Untergrund vorhandene Feuchtigkeit oder gezieltes Annässen bewirkt die gewünschte Porenstruktur, wodurch das dauerhafte Anhaften und ggf. Austrocknen der Fußbodenschichten gewährleistet ist.

## Patentansprüche

1. Kunstharzgebundenes Beschichtungsmaterial zum Auftrag auf Gebäudewände bzw. Fußböden, vorzugsweise Kunstharzputz, - Farbe oder -Estrich, mit einer Dampfdiffusion ermöglichenden Materialstruktur, dadurch gekennzeichnet, daß zur Dampfdiffusionserhöhung kapillaren- bzw. porenbildende Zusatzstoffe in Form von Fasern, Hohlfasern, Kugeln, Hohlkugeln, Blättchen, Kristallen oder Granulat beigefügt sind, die im wesentlichen erst nach Verfestigung des Materials löslich sind und mit ihrer Menge und Größe die Porendichte und Porenstruktur bestimmen.

2. Beschichtungsmaterial nach Anspruch 1, dadurch gekennzeichnet, daß die Zusatzstoffe in wässrigem Milieu lösbar sind.

3. Beschichtungsmaterial nach Anspruch 1 oder 2, dadurch gekennzeichnet, daß die Zusatzstoffe aus wasser- oder alkalilöslichen Polymeren bestehen.

4. Beschichtungsmaterial nach Anspruch 1 oder 2, dadurch gekennzeichnet, daß die Zusatzstoffe aus anorganischen, wasserlöslichen Substanzen bestehen.

## Claims

1. A synthetic resin-bonded coating material for application to building walls or floors, preferably a synthetic resin plaster, colouring substance or screed, with a material structure which permits the diffusion of vapour, characterised in that capillary- or pore-forming additives in the form of fibres, hollow fibres, spheres, hollow spheres, lamellae, crystals or granular material are added to enhance the diffusion of vapour, which additives are essentially only soluble after the solidification of the material, and the amount and size of which determine the pore structure.

2. A coating material according to claim 1, characterised in that the additives are soluble in aqueous media.

3. A coating material according to claim 1 or 2, characterised in that the additives consist of polymers soluble in water or alkalies.

4. A coating material according to claim 1 or 2, characterised in that the additives consist of inorganic water-soluble substances.

## Revendications

1. Matériau d'enduction à liant résinoïde pour application sur des murs de bâtiments ou sur des sols, en particulier enduits, peintures ou chapes à résine synthétique avec une structure permettant une diffusion de la vapeur, caractérisé par le fait que, pour augmenter cette diffusion de vapeur, il renferme des additifs générateurs de porosité et de capillarité sous forme de fibres, fibres creuses, billes, billes creuses, lamelles, cristaux et granulats, lesquels ne deviennent solubles que principalement après solidification du matériau, et déterminent la densité et la structure des pores par leur quantité et leurs dimensions.

2. Matériau d'enduction suivant revendication 1, caractérisé par le fait que ses additifs sont solubles en milieux aqueux.

3. Matériau d'enduction suivant revendication 1 ou 2, caractérisé par le fait que ses additifs se composent de polymères solubles dans l'eau ou l'alcali.

4. Matériau d'enduction suivant revendication 1 ou 2, caractérisé par le fait que ses additifs se composent de substances inorganiques solubles dans l'eau.
